# EUROPEAN PATENT APPLICATION

(11) **EP 2 730 938 A1**
(43) Date of publication of application: **14.05.2014**
(21) Application number: 13192144.7
(22) Date of filing: 08.11.2013
(51) Int. Cl.: G01S 5/12

(54) **Apparatus and method for outputting location of wireless charging device in portable terminal**

(30) Priority: 08.11.2012 KR 20120126010
(71) Applicant: Samsung Electronics Co., Ltd, Gyeonggi-do 443-742 (KR)
(72) Inventor: An, Dae-Won, 443-742 Gyeonggi-do (KR)
(74) Representative: Nederlandsch Octrooibureau

(57) **Abstract**

An apparatus and a method for outputting a location of a wireless charging device in a portable terminal are provided. A radio frequency signal is received from the wireless charging device. A strength and a reception direction of the radio frequency signal are determined by analyzing the radio frequency signal. The location of the wireless charging device is estimated based on the strength and the reception direction of the radio frequency signal. The estimated location is output using a pre-designated location notification scheme.

## Description

### BACKGROUND OF THE INVENTION

### Field of the Invention:

The present invention relates to a portable terminal. More particularly, the present invention relates to an apparatus and a method for outputting a location of a wireless charging device in a portable terminal.

### Description of the Related Art:

Portable terminals, such as smart phones and tablet Personal Computers (PCs), provide users with many useful functions in many different applications. Therefore, according to the many useful functions provided by the portable terminals, the portable terminals have evolved into devices which enable the use of various types of information together with a voice communication function. For example, the portable terminal provides a function of charging a battery of the portable terminal by using a wireless charging device (e.g., the portable terminal may charge the battery of the portable device without a wire).

The wireless charging device serves to wirelessly charge a battery of a portable terminal located within a predetermined distance. The wireless charging device may be located inside or outside a building. A problem arises in that a user of the portable terminal must look around a building in order to determine the location of the wireless charging device. As a result, the user of the portable terminal may fail to find the wireless charging device, and therefore is unable charge the battery of the portable terminal.

Therefore, the need of a solution for solving the above problem has arisen. For example, a need exists for an apparatus and a method for outputting a location of a wireless charging device located around a portable terminal in the portable terminal.

The above information is presented as background information only to assist with an understanding of the present disclosure. No determination has been made, and no assertion is made, as to whether any of the above might be applicable as prior art with regard to the present invention.

### SUMMARY OF THE INVENTION

Aspects of the present invention are to address at least the above-mentioned problems and/or disadvantages and to provide at least the advantages described below. Accordingly, an aspect of the present invention is to provide an apparatus and a method for outputting a location of a wireless charging device located around a portable terminal in the portable terminal.

Another aspect of the present invention is to provide an apparatus and a method for estimating and outputting a location of a wireless charging device based on a radio frequency signal broadcasted by the wireless charging device in a portable terminal.

In accordance with an aspect of the present invention, an apparatus which outputs a location of a wireless charging device in a portable terminal is provided. The apparatus includes a radio frequency unit which receives a radio frequency signal from the wireless charging device, and a controller configured to determine a strength and a reception direction of the radio frequency signal by analyzing the radio frequency signal, to estimate the location of the wireless charging device based on the strength and the reception direction of the radio frequency signal, and to perform a control operation so as to output the estimated location using a pre-designated location notification scheme.

In accordance with another aspect of the present invention, a method for outputting a location of a wireless charging device in a portable terminal is provided. The method includes receiving a radio frequency signal from the wireless charging device, determining a strength and a reception direction of the radio frequency signal by analyzing the radio frequency signal, estimating the location of the wireless charging device based on the strength and the reception direction of the radio frequency signal, and outputting the estimated location using a pre-designated location notification scheme.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features, and advantages of certain exemplary embodiments of the present invention will be more apparent from the following description taken in conjunction with the accompanying drawings, in which:
FIG. 1 illustrates a configuration of a communication system according to an exemplary embodiment of the present invention;
FIG. 2 is a block diagram illustrating a configuration of a portable terminal according to an exemplary embodiment of the present invention;
FIG. 3 is a block diagram illustrating a configuration of a wireless charging device according to an exemplary embodiment of the present invention;
FIG. 4 is a flowchart illustrating a method for setting a notification scheme for outputting a location of a wireless charging device in a portable terminal according to an exemplary embodiment of the present invention;
FIG. 5 is a signal flow diagram illustrating a method for outputting a location of a wireless charging device in a portable terminal according to an exemplary embodiment of the present invention;
FIG. 6 is a signal flow diagram illustrating a method for outputting a location of a wireless charging device in a portable terminal according to an exemplary embodiment of the present invention;
FIG. 7 illustrates a screen for setting a notification scheme for outputting a location of a wireless charging device in a portable terminal according to an exemplary embodiment of the present invention; and
FIG. 8 illustrates a screen for displaying a location of a wireless charging device in a portable terminal according to an exemplary embodiment of the present invention.

Throughout the drawings, it should be noted that like reference numbers are used to depict the same or similar elements, features, and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. In addition, description of well-known functions and constructions may be omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention is provided for illustration purpose only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

According to exemplary embodiments of the present invention, portable terminals may be a video phone, a mobile phone, a smart phone, an International Mobile Telecommunication 2000 (IMT-2000) terminal, a Wideband Code Division Multiple Access (W-CDMA) terminal, a Universal Mobile Telecommunication Service (UMTS) terminal, a Personal Digital Assistant (PDA), a Portable Multimedia Player (PMP), a Digital Multimedia Broadcasting (DMB) terminal, an e-book, portable computers (e.g., a laptop, a tablet Personal Computer (PC), etc.), a digital camera, an MP3 player, a Global Positioning System (GPS) navigation, and the like.

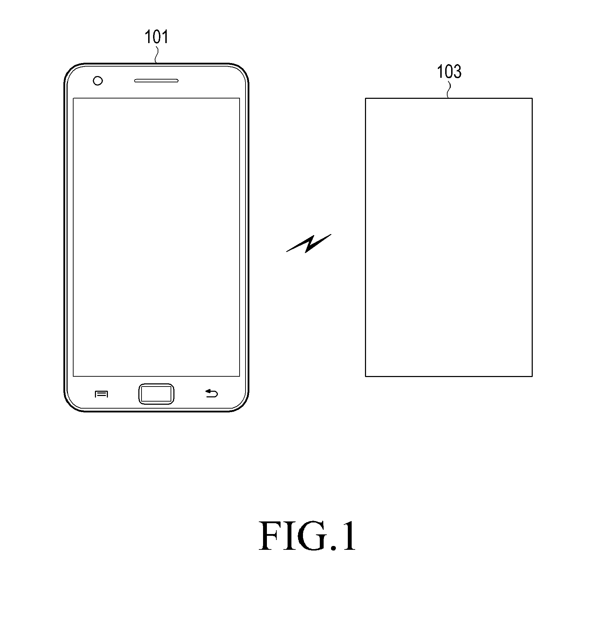

FIG. 1 illustrates a configuration of a communication system according to an exemplary embodiment of the present invention.

Referring to FIG. 1, the communication system includes a portable terminal 101 and a wireless charging device 103.

When the portable terminal 101 is located in a near-field of a radiated field, the wireless charging device 103 transmits wireless power to the portable terminal 101 through an antenna for transmitting wireless power. The words "wireless power" may be used to refer to any form of energy which is associated with electric fields, magnetic fields, electromagnetic fields, and the like, or which is otherwise transmitted from the wireless charging device 103 to the portable terminal 101 without the use of physical electrical conductors.

The wireless charging device 103 emits a Radio Frequency (RF) signal to the outside. An RF signal corresponds to a signal broadcasted by the wireless charging device 103 in order to enable the portable terminal 101 to detect a location of the wireless charging device 103.

Such RF signals may be generated in the following two schemes: a direct generation scheme, and an indirect generation scheme.

In a direct generation scheme, an RF signal is generated by using a particular frequency generated by a resonance coil included in the wireless charging device 103. For example, the wireless charging device 103 has a resonance coil in order to wirelessly charge the portable terminal 101 with power, and the wireless charging device 103 generates a particular frequency by providing power to the resonance coil. The term "particular frequency" refers to a unique RF signal emitted by the wireless charging device 103. The portable terminal 101 may receive an RF signal, may identify (e.g., determine) a frequency band of the received RF signal, and may identify (e.g., determine) whether the received RF signal corresponds to an RF signal transmitted by the wireless charging device 103, by using the identified frequency band.

In an indirect generation scheme, an RF signal is generated by using a short-range wireless communication scheme. The term "short-range wireless communication scheme" refers to a communication scheme which provides a maximum communication range of about 50 to 300 m. For example, the short-range wireless communication scheme may be one of a Wi-Fi scheme, a Bluetooth scheme, a Zigbee scheme, and the like.

The wireless charging device 103 generates an RF signal including a unique identifier assigned to the wireless charging device 103, and periodically broadcasts an RF signal generated in the short-range wireless communication scheme. The term "unique identifier" refers to a unique identifier assigned to a group of the wireless charging devices 103. The portable terminal 101 may receive an RF signal, may identify (e.g., determine) the unique identifier included in the received RF signal, and may identify (e.g., determine) whether the received RF signal corresponds to an RF signal transmitted by the wireless charging device 103, by using the identified unique identifier.

When a user executes a location notification function related to the wireless charging device 103, the portable terminal 101 receives an RF signal from at least one wireless charging device 103 located around the portable terminal 101, analyzes the received RF signal, measures a strength of the received RF signal and identifies (e.g., determines) a transmission direction of the received RF signal, based on a result of analyzing the received RF signal. Thereafter, the portable terminal 101 estimates a distance between the wireless charging device 103 and the portable terminal 101 based on the measured strength of the received RF signal, and outputs a location of the wireless charging device 103 based on the estimated distance between the wireless charging device 103 and the portable terminal 101 and the identified (e.g., determined) transmission direction of the received RF signal.

At this time, the portable terminal 101 may output a location of the wireless charging device 103 by using at least one of an icon, a vibration, an audio signal, and the like. For example, a portable terminal 101 may generate an icon, which represents the estimated distance between the wireless charging device 103 and the portable terminal 101 and a moving direction from the portable terminal 101 to the wireless charging device 103, and the portable terminal 101 may display the generated icon by using the display unit 203. As another example, when a distance between the portable terminal 101 and the wireless charging device 103 gets shorter and shorter, the portable terminal 101 may gradually increase the strength of vibration, and thereby may notify (e.g., indicate to) the user that the portable terminal 101 is getting closer and closer to the wireless charging device 103. As another example, when a distance between the portable terminal 101 and the wireless charging device 103 gets shorter and shorter, the portable terminal 101 may gradually reduce an output interval between audio signals, and thereby may notify the user that the portable terminal 101 is getting closer and closer to the wireless charging device 103.

According to exemplary embodiments of the present invention, the portable terminal 101 may provide a user with an indication of the presence of a wireless charging device 103, a distance (e.g., an absolute distance, a relative distance, or the like) between the portable terminal 101 and the wireless charging device 103, a location (e.g., an absolute location, a relative location, of the like) of the wireless charging device 103, a change in any of the presence of the wireless charging device 103, a change in the distance between the portable terminal 101 and the wireless charging device 103, and a change in the relative location of the wireless charging device 103.

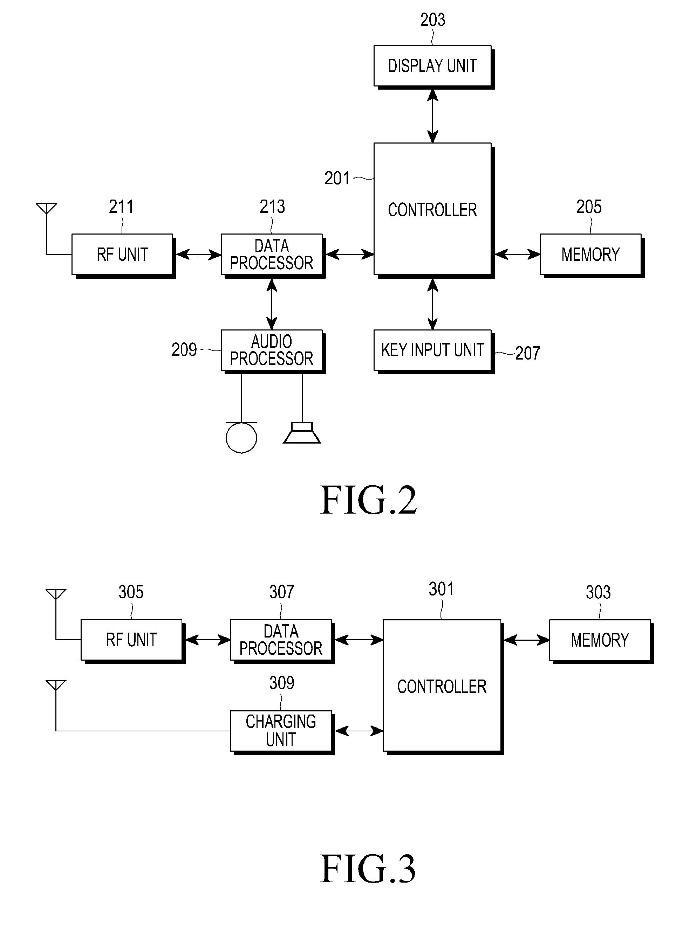

FIG. 2 is a block diagram illustrating a configuration of a portable terminal according to an exemplary embodiment of the present invention.

Referring to FIG. 2, the portable terminal 101 includes a controller 201, a display unit 203, a memory 205, an input unit 207, an audio processor 209, an RF unit 211, and a data processor 213.

The RF unit 211 performs a wireless communication function of the portable terminal 101. More specifically, the RF unit 211 includes a radio transmitter for upconverting the frequency of a signal to be transmitted and for then amplifying the frequency-upconverted signal, a radio receiver for low-noise amplifying a received signal and for then downconverting the frequency of the low-noise amplified signal, and the like.

The data processor 213 includes a transmitter for encoding and modulating a signal to be transmitted, a receiver for demodulating and decoding a signal received by the RF unit 211, and the like. The data processor 213 may include a modem and a codec. The codec includes a data codec for processing packet data and the like, and an audio codec for processing audio signals including voice and the like.

An audio processor 209 reproduces a received audio signal, which has been output from the data processor 213, or transmits an audio signal to be transmitted, which is generated from a microphone, to the data processor 213.

The input unit 207 (e.g., a key input unit) may include keys for inputting numbers and text information and function keys for setting various functions.

The display unit 203 displays an image signal on a screen thereof, and displays data, which the controller 201 has requested the display unit 203 to output, on the screen thereof.

When the display unit 203 employs a capacitive/electrostatic touch screen, a resistive/pressure-sensitive touch screen, or the like, the key input unit 207 may include only a minimum number of keys, which have previously been set. For example, the display unit 203 may replace some of key input functions of the key input unit 207 (e.g., by configuring and displaying a soft keypad). According to exemplary embodiments of the present invention, the display unit 203 may be implemented by a touch screen.

The memory 205 includes a program memory and a data memory. The program memory stores a booting and an Operating System (OS) for controlling a general operation of the portable terminal 101. The data memory stores various data generated during operation of the portable terminal 101.

The controller 201 controls an overall operation of the portable terminal 101. For example, the controller 201 performs a control operation for displaying multiple notification schemes each for notifying of a location of the wireless charging device 103. When the user selects at least one notification scheme from among the multiple displayed notification schemes, the controller 201 sets a location notification scheme related to the wireless charging device 103 so as to output the location of the wireless charging device 103 in the selected notification scheme.

For example, the controller 201 identifies (e.g., determines) whether the user has requested location notification setting related to the wireless charging device 103. When a result of the identification shows that the user has requested the location notification setting related to the wireless charging device 103, the controller 201 controls the display unit 203 to output a pre-designated location notification setting menu related to the wireless charging device 103. The location notification setting menu may be used to set a scheme for outputting a location of the wireless charging device 103, and may include an icon scheme, an audio scheme, a vibration scheme, and the like.

The term "icon scheme" refers to a scheme for displaying a location of the wireless charging device 103 by using an icon. The term "audio scheme" refers to a scheme for outputting the location of the wireless charging device 103 by using an audio signal. The term "vibration scheme" refers to a scheme for outputting the location of the wireless charging device 103 by using vibration.

When the user selects at least one of the icon scheme, the audio scheme and the vibration scheme, the controller 201 sets a location notification scheme related to the wireless charging device 103 to the selected notification scheme. Thereafter, the controller 201 terminates the output of the location notification setting menu.

The controller 201 receives an RF signal from the wireless charging device 103, estimates a location of the wireless charging device 103 based on the received RF signal, and outputs the estimated location of the wireless charging device 103 in a pre-designated location notification scheme.

More specifically, the controller 201 identifies (e.g., determines) whether the user has requested the execution of a location notification function related to the wireless charging device 103. When the controller 201 identifies (e.g., determines) that the user has requested the execution of the location notification function related to the wireless charging device 103, the controller 201 controls the RF unit 211 to sense (e.g., detect) an RF signal from the wireless charging device 103, and receives the sensed (e.g. detected) RF signal from the wireless charging device 103.

RF signals are generated in the following two schemes. The first scheme is a direct generation scheme, and the second scheme is an indirect generation scheme. In the direct generation scheme, an RF signal is generated by using a particular frequency generated by a resonance coil included in the wireless charging device 103. In the indirect generation scheme, an RF signal is generated by using a short-range wireless communication scheme.

When an RF signal generated by using the direct generation scheme is received, the controller 201 may identify (e.g., determine) a frequency band of the received RF signal, and may identify (e.g., determine) whether the received RF signal corresponds to an RF signal transmitted by the wireless charging device 103, by using the identified frequency band. In contrast, when an RF signal generated by using the direct generation scheme is received, the controller 201 may identify (e.g., determine) the unique identifier included in the received RF signal, and may identify (e.g., determine) whether the received RF signal corresponds to an RF signal transmitted by the wireless charging device 103, by using the identified unique identifier. The term "unique identifier" refers to a unique identifier assigned to a group of the wireless charging devices 103.

The controller 201 identifies (e.g., determine) a strength and a transmission direction of the received RF signal, and estimates a location of the wireless charging device 103 based on the identified strength and transmission direction of the received RF signal. The controller 201 performs a control operation for outputting the estimated location of the wireless charging device 103 by using a preset location notification scheme related to the wireless charging device 103.

At this time, a controller 201 may perform a control operation for outputting a location of the wireless charging device 103 by using at least one of an icon, a vibration, an audio signal, and the like. For example, the controller 201 may generate an icon, which includes the estimated distance between the wireless charging device 103 and the portable terminal 101 and a moving direction from the portable terminal 101 to the wireless charging device 103, and may control the display unit 203 of the portable terminal 101 to display the generated icon. As another example, when a distance between the portable terminal 101 and the wireless charging device 103 gets shorter and shorter, the controller 201 controls a vibration unit (not shown) to gradually increase the strength of vibration, and may thereby notify the user that the portable terminal 101 is getting closer and closer to the wireless charging device 103. As another example, when a distance between the portable terminal 101 and the wireless charging device 103 gets shorter and shorter, the controller 201 controls the audio processor 209 to gradually reduce an output interval between audio signals, and may thereby notify the user that the portable terminal 101 is getting closer and closer to the wireless charging device 103.

When RF signals are received from the multiple wireless charging devices 103, the controller 201 determines the closest wireless charging device 103 to the portable terminal 101 based on the received RF signals, estimates a location of the determined wireless charging device 103, and performs a control operation for outputting the estimated location of the determined wireless charging device 103 in a pre-designated location notification scheme.

According to exemplary embodiments of the present invention, when RF signals are received from the multiple wireless charging devices 103, the controller 201 may provide the user with a list (or another identification or indication) of the multiple wireless charging devices 103 (e.g., in range). The controller 201 may include characteristics associated with each of the multiple wireless charging devices 103 such as, for example, distance, location, and the like.

The controller 201 identifies (e.g., determines) whether the user has requested the execution of a location notification function related to the wireless charging device 103. When the controller 201 identifies (e.g., determines) that the user has requested the execution of the location notification function related to the wireless charging device 103, the controller 201 controls the RF unit 211 to sense (e.g., detect) an RF signal from at least one wireless charging device 103 located around the portable terminal 101, and receives the sensed (e.g., detected) RF signal from the at least one wireless charging device 103.

When first and second RF signals are received from the multiple wireless charging devices 103, the controller 201 measures first and second signal strengths of the received first and second RF signals. Thereafter, the controller 201 compares the measured first signal strength with the measured second signal strength and thereby determines the largest signal strength among the measured first and second signal strengths, and identifies (e.g., determines) an RF signal corresponding to the largest signal strength among the measured first and second signal strengths. According to exemplary embodiments of the present invention, the wireless charging device 103, which transmits an RF signal having a larger signal strength among the multiple wireless charging devices 103, is located closer to the portable terminal 101.

Thereafter, the controller 201 identifies (e.g., determines) a transmission direction of the identified (e.g., determined) RF signal, and estimates a location of the wireless charging device 103 based on the identified (e.g., determined) strength and transmission direction of the identified (e.g., determined) RF signal. Thereafter, the controller 201 performs a control operation for outputting the estimated location of the wireless charging device 103 by using a preset location notification scheme related to the wireless charging device 103.

FIG. 3 is a block diagram illustrating a configuration of a wireless charging device according to an exemplary embodiment of the present invention.

Referring to FIG. 3, the wireless charging device 103 includes a controller 301, a memory 303, an RF unit 305, a data processor 307, and a charging unit 309.

The RF unit 305 performs a wireless communication function of the wireless charging device 103. For example, the RF unit 305 includes a radio transmitter for upconverting the frequency of a signal to be transmitted and for thereafter amplifying the frequency-upconverted signal, a radio receiver for low-noise amplifying a received signal and for thereafter downconverting the frequency of the low-noise amplified signal, and the like. The data processor 307 includes a transmitter for encoding and modulating a signal to be transmitted, a receiver for demodulating and decoding a signal received by the RF unit 211, and the like. The data processor 307 may include a modem and a codec. The codec includes a data codec for processing packet data and the like, and an audio codec for processing audio signals including voice and the like.

The memory 303 includes a program memory and a data memory. The program memory stores a booting and OS for controlling a general operation of the wireless charging device 103. The data memory stores various data generated during operation of the wireless charging device 103.

The charging unit 309 includes a resonance coil, and applies a current to the resonance coil and generates a radiated field. The charging unit 309 generates wireless power. When the portable terminal 101 is located in a near-field of the radiated field, the charging unit 309 delivers the generated wireless power to the portable terminal 101 through an antenna. The words "wireless power" may refer to any form of energy which is associated with electric fields, magnetic fields, electromagnetic fields, and the like, or which is otherwise transmitted from the wireless charging device 103 to the portable terminal 101 without the use of physical electrical conductors.

The controller 301 controls an overall operation of the wireless charging device 103. The controller 301 emits an RF signal to the outside. An RF signal corresponds to a signal broadcasted by the wireless charging device 103 in order to enable the portable terminal 101 to detect a location of the wireless charging device 103.

Such RF signals may be generated in the following two schemes: a direct generation scheme, and an indirect generation scheme.

In a direct generation scheme, an RF signal is generated by using a particular frequency generated by a resonance coil included in the charging unit 309 of the wireless charging device 103.

For example, the charging unit 309 of the wireless charging device 103 has a resonance coil in order to wirelessly charge the portable terminal 101 with power, and the controller 301 generates a particular frequency by providing power to the resonance coil. The term "particular frequency" refers to a unique RF signal emitted by the charging unit 309 of the wireless charging device 103. The portable terminal 101 may receive an RF signal, may identify (e.g., determine) a frequency band of the received RF signal, and may identify (e.g., determine) whether the received RF signal corresponds to an RF signal transmitted by the wireless charging device 103, by using the identified frequency band.

In an indirect generation scheme, an RF signal is generated by using a short-range wireless communication scheme. The term "short-range wireless communication scheme" refers to a communication scheme which provides a maximum communication range of about 50 to 300 m. For example, the short-range wireless communication scheme may be one of a Wi-Fi scheme, a Bluetooth scheme, a Zigbee scheme, and the like.

The controller 301 generates an RF signal including a unique identifier assigned to the wireless charging device 103, and controls an RF unit 305 to periodically broadcast an RF signal generated in the short-range wireless communication scheme. The term "unique identifier" refers to a unique identifier assigned to a group of the wireless charging devices 103. The portable terminal 101 may receive an RF signal, may identify (e.g., determine) the unique identifier included in the received RF signal, and may identify (e.g., determine) whether the received RF signal corresponds to an RF signal transmitted by the wireless charging device 103, by using the identified unique identifier.

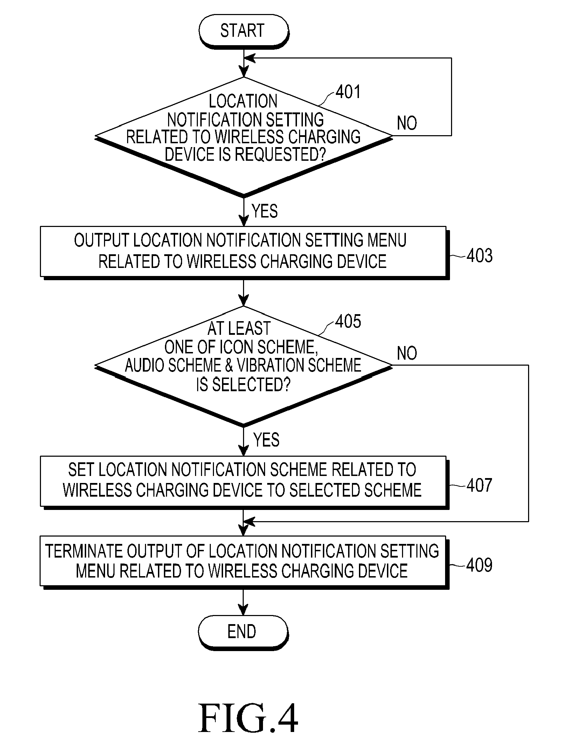

FIG. 4 is a flowchart illustrating a method for setting a notification scheme for outputting a location of a wireless charging device in a portable terminal according to an exemplary embodiment of the present invention.

Referring to FIG. 4, in step 401, the controller 201 identifies (e.g., determines) whether the user has requested location notification setting related to the wireless charging device 103. When the controller 201 identifies (e.g., determines) that the user has requested the location notification setting related to the wireless charging device 103 in step 401, then the controller 201 proceeds to step 403. Otherwise, the controller 201 repeatedly performs step 401.

In step 403, the controller 201 outputs a pre-designated location notification setting menu related to the wireless charging device 103 by using the display unit 203, and thereafter proceeds to step 405. The location notification setting menu is used to set a scheme for outputting a location of the wireless charging device 103, and includes an icon scheme, an audio scheme, a vibration scheme, and the like. The term "icon scheme" refers to a scheme for displaying a location of the wireless charging device 103 by using an icon. The term "audio scheme" refers to a scheme for outputting the location of the wireless charging device 103 by using an audio signal. The term "vibration scheme" refers to a scheme for outputting the location of the wireless charging device 103 by using vibration.

In step 405, the controller 201 identifies (e.g., determines) whether the user selects at least one of the icon scheme, the audio scheme, the vibration scheme, and the like. When the controller 201 identifies (e.g., determines) that the user selects at least one of the icon scheme, the audio scheme and the vibration scheme in step 405, the controller 201 proceeds to step 407. Otherwise, the controller 201 proceeds to step 409.

In step 407, the controller 201 sets a location notification scheme related to the wireless charging device 103 to the selected notification scheme, and thereafter proceeds to step 409. For example, if the selected notification scheme corresponds to the icon scheme, the controller 201 may generate an icon, which includes the estimated distance between the wireless charging device 103 and the portable terminal 101 and a moving direction from the portable terminal 101 to the wireless charging device 103, and may display the generated icon.

As another example, if the selected notification scheme corresponds to the vibration scheme, when a distance between the portable terminal 101 and the wireless charging device 103 gets shorter and shorter, the controller 201 gradually increases the strength of vibration, and may thereby notify the user that the portable terminal 101 is getting closer and closer to the wireless charging device 103.

As another example, if the selected notification scheme corresponds to the audio scheme, when a distance between the portable terminal 101 and the wireless charging device 103 gets shorter and shorter, the controller 201 gradually reduces an output interval between audio signals, and may thereby notify the user that the portable terminal 101 is getting closer and closer to the wireless charging device 103.

In step 409, the controller 201 terminates the output of the location notification setting menu.

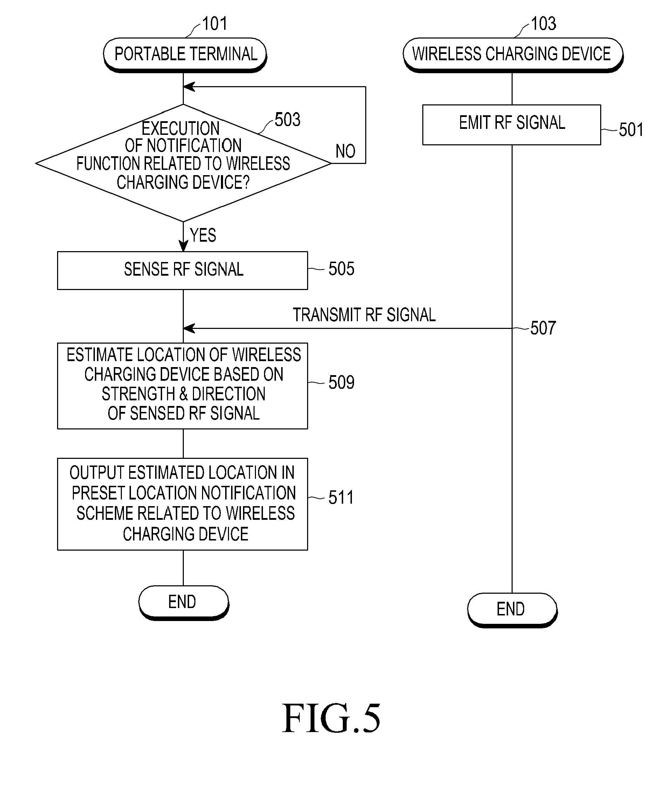

FIG. 5 is a signal flow diagram illustrating a method for outputting a location of a wireless charging device in a portable terminal according to an exemplary embodiment of the present invention.

Referring to FIG. 5, the portable terminal 101 outputs a location of the wireless charging device 103 when one wireless charging device 103 exists around (in proximity to) the portable terminal 101.

In step 501, the controller 301 of the wireless charging device 103 emits an RF signal, and thereafter the method proceeds to step 503. The RF signal may be generated by using one of the direct generation scheme and the indirect generation scheme. In the direct generation scheme, an RF signal is generated by using a particular frequency generated by a resonance coil included in the wireless charging device 103. In the indirect generation scheme, an RF signal including a unique identifier of the wireless charging device 103 is generated by using a short-range wireless communication scheme.

In step 503, the controller 201 of the portable terminal 101 identifies (e.g., determines) whether the user has requested the execution of a location notification function related to the wireless charging device 103. When the controller 201 identifies (e.g., (e.g., determines) that the user has requested the execution of the location notification function related to the wireless charging device 103, the method (e.g., the controller 201) proceeds to step 505. Otherwise, the controller 201 repeatedly performs step 503.

In step 505, the controller 201 senses (e.g., detects) an RF signal from the wireless charging device 103.

Thereafter, in step 507, the controller 201 receives the sensed (e.g., detected) RF signal from the wireless charging device 103, and the method (e.g., the controller 201) proceeds to step 509.

At this time, when an RF signal generated by using the direct generation scheme is received, the controller 201 may identify (e.g., determine) a frequency band of the received RF signal, and may identify (e.g., determine) whether the received RF signal corresponds to an RF signal transmitted by the wireless charging device 103, by using the identified frequency band. In contrast, when an RF signal generated by using the direct generation scheme is received, the controller 201 may identify (e.g., determine) the unique identifier included in the received RF signal, and may identify (e.g., determine) whether the received RF signal corresponds to an RF signal transmitted by the wireless charging device 103, by using the identified unique identifier. The term "unique identifier" refers to a unique identifier assigned to a group of the wireless charging devices 103.

In step 509, the controller 201 identifies (e.g., determines) a strength and a transmission direction of the received RF signal, and estimates a location of the wireless charging device 103 based on the identified (e.g., determined) strength and transmission direction of the received RF signal. Thereafter, the method (e.g., the controller 201) proceeds to step 511. At this time, the memory 205 stores, as a database, distances between the portable terminal 101 and the wireless charging device 103, which correspond to strengths of RF signals. Accordingly, the controller 201 identifies (e.g., determines) a distance between the portable terminal 101 and the wireless charging device 103, which corresponds to the identified strength of the received RF signal.

The strength of an RF signal is inversely proportional to a distance between the portable terminal 101 and the wireless charging device 103. For example, when the wireless charging device 103 emits an RF signal having a pre-designated strength, the longer a distance between the portable terminal 101 and the wireless charging device 103, the smaller the strength of an RF signal received by the portable terminal 101.

In step 511, the controller 201 outputs the estimated location of the wireless charging device 103 by using a preset location notification scheme related to the wireless charging device 103.

The controller 201 may output a location of the wireless charging device 103 by using at least one of an icon, a vibration, an audio signal, and the like. For example, if the selected notification scheme corresponds to the icon scheme, the controller 201 may generate an icon, which includes the estimated distance between the wireless charging device 103 and the portable terminal 101 and a moving direction from the portable terminal 101 to the wireless charging device 103, and may thereafter display the generated icon.

As another example, if the selected notification scheme corresponds to the vibration scheme, when a distance between the portable terminal 101 and the wireless charging device 103 gets shorter and shorter, the controller 201 gradually increases the strength of vibration, and may thereby notify the user that the portable terminal 101 is getting closer and closer to the wireless charging device 103.

As another example, if the selected notification scheme corresponds to the audio scheme, when a distance between the portable terminal 101 and the wireless charging device 103 gets shorter and shorter, the controller 201 gradually reduces an output interval between audio signals, and may thereby notify the user that the portable terminal 101 is getting closer and closer to the wireless charging device 103.

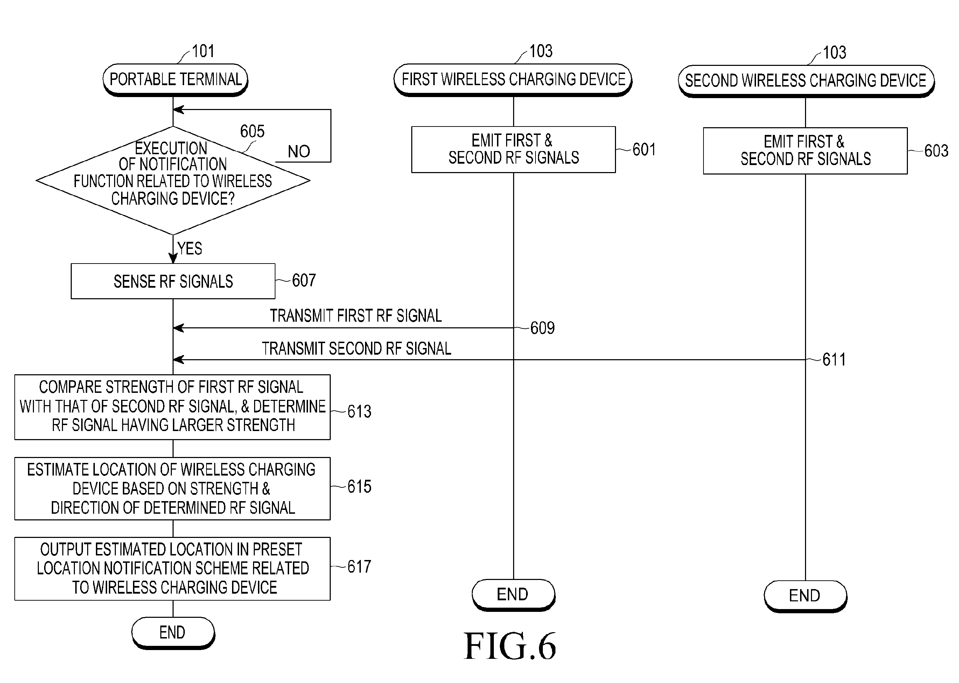

FIG. 6 is a signal flow diagram illustrating a method for outputting a location of a wireless charging device in a portable terminal according to an exemplary embodiment of the present invention.

Referring to FIG. 6, the portable terminal 101 outputs a location of the wireless charging device 103 which is closest to the portable terminal 101 when the multiple wireless charging devices 103 exist around the portable terminal 101.

In steps 601 and 603, each of the multiple wireless charging devices 103 emits an RF signal, and thereafter the method proceeds to step 605. Here, the RF signal may be generated by using one of the direct generation scheme and the indirect generation scheme. In the direct generation scheme, an RF signal is generated by using a particular frequency generated by a resonance coil included in the wireless charging device 103. In the indirect generation scheme, an RF signal including a unique identifier of the wireless charging device 103 is generated by using a short-range wireless communication scheme.

In step 605, the controller 201 of the portable terminal 101 identifies (e.g., determines) whether the user has requested the execution of a location notification function related to the wireless charging device 103. When the controller 201 identifies (e.g., determines) that the user has requested the execution of the location notification function related to the wireless charging device 103 in step 605, the controller 201 proceeds to step 607. Otherwise, the controller 201 repeatedly performs step 605.

In step 607, the controller 201 senses (e.g., detects) RF signals from the multiple wireless charging devices 103.

Thereafter, in step 609, the controller 201 receives a first RF signal from the first wireless charging device 103.

In step 611, the controller 201 receives a second RF signal from the second wireless charging device 103. Thereafter, the method (e.g., the controller 201) proceeds to step 613.

At this time, when an RF signal generated by using the direct generation scheme is received, the controller 201 may identify (e.g., determine) a frequency band of the received RF signal, and may identify (e.g., determine) whether the received RF signal corresponds to an RF signal transmitted by the wireless charging device 103, by using the identified frequency band. In contrast, when an RF signal generated by using the direct generation scheme is received, the controller 201 may identify (e.g., determine) the unique identifier included in the received RF signal, and may identify (e.g., determine) whether the received RF signal corresponds to an RF signal transmitted by the wireless charging device 103, by using the identified unique identifier. The term "unique identifier" refers to a unique identifier assigned to a group of the wireless charging devices 103.

In step 613, the controller 201 measures first and second signal strengths of the received first and second RF signals, compares the measured first signal strength with the measured second signal strength, determines the largest signal strength among the measured first and second signal strengths, and identifies an RF signal corresponding to the largest signal strength among the measured first and second signal strengths. Thereafter, the method (e.g., the controller 201) proceeds to step 615.

In step 615, the controller 201 identifies (e.g., determines) a strength and a transmission direction of the identified RF signal, estimates a location of the wireless charging device 103 based on the identified (e.g., determined) strength and transmission direction of the identified RF signal, and thereafter proceeds to step 617.

The memory 205 stores, as a database, distances between the portable terminal 101 and the wireless charging device 103, which correspond to strengths of RF signals. Accordingly, the controller 201 identifies (e.g., determines) a distance between the portable terminal 101 and the wireless charging device 103, which corresponds to the identified (e.g., determined) strength of the received RF signal.

In step 617, the controller 201 outputs the estimated location of the wireless charging device 103 by using a preset location notification scheme related to the wireless charging device 103.

The controller 201 may output a location of the wireless charging device 103 by using at least one of an icon, a vibration, an audio signal, and the like. For example, if the selected notification scheme corresponds to the icon scheme, the controller 201 may generate an icon, which includes the estimated distance between the wireless charging device 103 and the portable terminal 101 and the identified moving direction from the portable terminal 101 to the wireless charging device 103, and may display the generated icon.

As another example, if the selected notification scheme corresponds to the vibration scheme, when a distance between the portable terminal 101 and the wireless charging device 103 gets shorter and shorter, the controller 201 gradually increases the strength of vibration, and may thereby notify the user that the portable terminal 101 is getting closer and closer to the wireless charging device 103.

As another example, if the selected notification scheme is the audio scheme, when a distance between the portable terminal 101 and the wireless charging device 103 gets shorter and shorter, the controller 201 gradually reduces an output interval between audio signals, and may thereby notify the user that the portable terminal 101 is getting closer and closer to the wireless charging device 103.

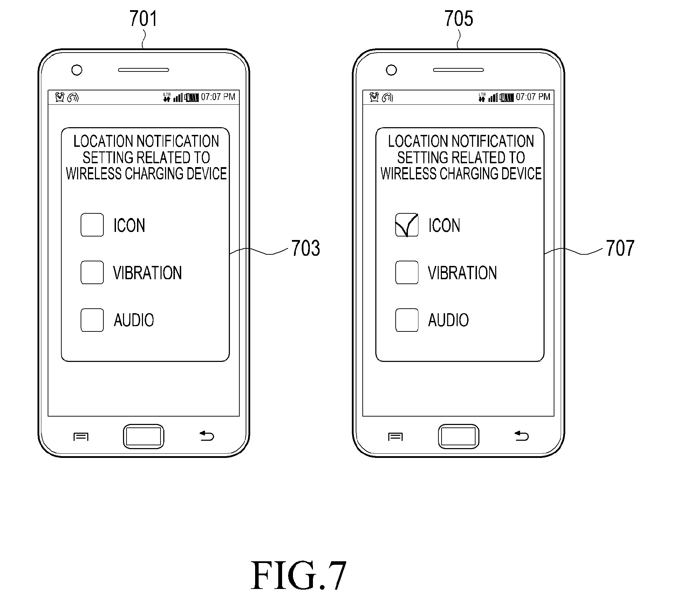

FIG. 7 illustrates a screen for setting a notification scheme for outputting a location of a wireless charging device in a portable terminal according to an exemplary embodiment of the present invention.

Referring to FIG. 7, reference numeral 701 denotes a screen on which a location notification setting menu 703 of the wireless charging device 103 is displayed. The location notification setting menu is used to set a scheme for outputting a location of the wireless charging device 103, and includes an icon scheme, an audio scheme, and a vibration scheme. The term "icon scheme" refers to a scheme for displaying a location of the wireless charging device 103 by using an icon. The term "audio scheme" refers to a scheme for outputting the location of the wireless charging device 103 by using an audio signal. The term "vibration scheme" refers to a scheme for outputting the location of the wireless charging device 103 by using vibration.

Reference numeral 705 denotes a screen on which the user has selected the icon scheme from among the icon scheme, the vibration scheme, and the audio scheme which are included in a location notification setting menu 707.

When the user has selected the icon scheme, the portable terminal 101 sets a notification scheme for notifying of a location of the wireless charging device 103, to the selected icon scheme. When a notification scheme is set to the icon scheme, if a location notification function related to the wireless charging device 103 is executed, a portable terminal 101 may generate an icon, which includes a distance between the wireless charging device 103 and the portable terminal 101 and a moving direction from the portable terminal 101 to the wireless charging device 103, and may display the generated icon.

In contrast, when the user has selected the vibration scheme, the portable terminal 101 sets a notification scheme for notifying of a location of the wireless charging device 103, to the selected vibration scheme. When a notification scheme is set to the vibration scheme, if a location notification function related to the wireless charging device 103 is executed, the portable terminal 101 increases the strength of vibration as a distance between the wireless charging device 103 and the portable terminal 101 is getting shorter, and may thereby notify the user that the portable terminal 101 is getting closer to the wireless charging device 103.

When the user has selected the audio scheme, the portable terminal 101 sets a notification scheme for notifying of a location of the wireless charging device 103 to the selected audio scheme. When a notification scheme is set to the audio scheme, if a location notification function related to the wireless charging device 103 is executed, the portable terminal 101 reduces an output interval between audio signals as a distance between the wireless charging device 103 and the portable terminal 101 is getting shorter, and may thereby notify the user that the portable terminal 101 is getting closer to the wireless charging device 103.

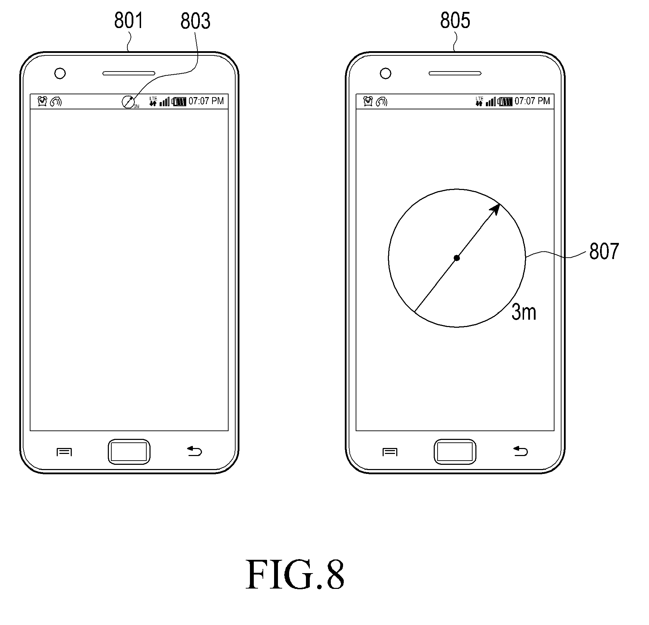

FIG. 8 illustrates a screen for displaying a location of a wireless charging device in a portable terminal according to an exemplary embodiment of the present invention.

Referring to FIG. 8, reference numeral 801 denotes a screen, on which an icon 803 including a direction and a distance of the wireless charging device 103 is displayed on an indicator bar. For example, when a distance between the portable terminal 101 and the wireless charging device 103 is equal to 3 meters and a moving direction from the portable terminal 101 to the wireless charging device 103 is the northeast, the portable terminal 101 may display an icon including a compass having an arrow pointing to the northeast and a distance of 3 meters between the portable terminal 101 and the wireless charging device 103. The portable terminal 101 may display the icon 803 when the distance between the wireless charging device 103 and the portable terminal 101 is less than a predefined and/or configurable distance threshold).

Reference numeral 805 denotes a screen, on the center of which an icon 807 of a pre-designated size including a direction and a distance to the wireless charging device 103 is displayed.

When a notification scheme for notifying of a location of the wireless charging device 103 is set to the icon scheme, the portable terminal 101 displays at least one of the screen 801 and the screen 805, and may thereby display a location of the wireless charging device 103.

According to exemplary embodiments of the present invention, through the above operations, the portable terminal outputs a location of a wireless charging device located around the portable terminal, so that the user of the portable terminal can quickly recognize the location of the wireless charging device. The portable terminal estimates and outputs a location of the wireless charging device based on a radio frequency signal broadcasted by the wireless charging device, so that the user of the portable terminal can quickly recognize the location of the wireless charging device.

According to an exemplary embodiment of the present invention, the method for outputting a location of the wireless charging device in the portable terminal may be implemented as computer-readable codes in a non-transient computer-readable recording medium. The non-transient computer-readable recording mediums include all types of recording devices which may be read by a computer system and on which data are stored. Examples of the recording mediums include a ROM (Read Only Memory), a RAM (Random Access Memory), an optical disc, a magnetic tape, a floppy disk, a hard disc, a nonvolatile memory, and the like, and may also include things implemented in the form of carrier wave (e.g. transmission through the Internet). The non-transient computer-readable recording mediums may be distributed in a computer system connected to a network, so that computer-readable codes may be stored in the distributed storage mediums and be executed in a distributed scheme.

While the invention has been shown and described with reference to certain exemplary embodiments thereof, it will be understood by those skilled in the art that various changes in form and details may be made therein without departing from the spirit and scope of the invention as defined by the appended claims and their equivalents.

## Claims

1. An apparatus which outputs a location of a wireless charging device in a portable terminal, the apparatus comprising:
a radio frequency unit which receives a radio frequency signal from the wireless charging device; and
a controller configured to determine a strength and a reception direction of the radio frequency signal by analyzing the radio frequency signal, to estimate the location of the wireless charging device based on the strength and the reception direction of the radio frequency signal, and to perform a control operation so as to output the estimated location using a pre-designated location notification scheme.

2. The apparatus as claimed in claim 1, wherein the radio frequency signal is generated by a resonance coil included in the wireless charging device.

3. The apparatus as claimed in claim 1, wherein the radio frequency signal is generated by the wireless charging device using a short-range communication scheme provided.

4. The apparatus as claimed in claim 1, wherein, when multiple radio frequencies are received from multiple wireless charging devices, the controller estimates strengths of the multiple radio frequencies, determines a radio frequency having a largest strength among the multiple radio frequencies based on the estimated strengths, and determines a reception direction of the determined radio frequency.

5. The apparatus as claimed in claim 1, wherein the controller performs a control operation so as to output the location of the wireless charging device by using at least one of an icon scheme, an audio scheme, and a vibration scheme.

6. The apparatus as claimed in claim 5, wherein, when a location notification scheme related to the wireless charging device is set to the icon scheme the controller performs a control operation so as to output an icon including a distance between the portable terminal and the wireless charging device, and to output a moving direction from the portable terminal to the wireless charging device.

7. The apparatus as claimed in claim 5, wherein, when a location notification scheme related to the wireless charging device is set to the vibration scheme, the controller determines a strength of vibration in such a manner as to be inversely proportional to a distance between the portable terminal and the wireless charging device, and performs a control operation so as to output the vibration having the determined strength.

8. The apparatus as claimed in claim 5, wherein, when a location notification scheme related to the wireless charging device is set to the audio scheme, the controller determines an interval of audio output in such a manner as to be inversely proportional to a distance between the portable terminal and the wireless charging device, and performs a control operation so as to output audio signals at the determined intervals of the audio output.

9. A method for outputting a location of a wireless charging device in a portable terminal, the method comprising:
receiving a radio frequency signal from the wireless charging device;
determining a strength and a reception direction of the radio frequency signal by analyzing the radio frequency signal;
estimating the location of the wireless charging device based on the strength and the reception direction of the radio frequency signal; and
outputting the estimated location using a pre-designated location notification scheme.

10. The method as claimed in claim 9, wherein the radio frequency signal is generated by a resonance coil included in the wireless charging device.

11. The method as claimed in claim 9, wherein the radio frequency signal is generated by the wireless charging device using a short-range communication scheme provided.

12. The method as claimed in claim 9, wherein the determining of the strength and the reception direction of the radio frequency signal comprises:
estimating strengths of multiple radio frequencies when the multiple radio frequencies are received from multiple wireless charging devices;
determining a radio frequency having a largest strength among the multiple radio frequencies based on the estimated strengths; and
determining a reception direction of the determined radio frequency.

13. The method as claimed in claim 9, wherein the outputting of the estimated location comprises outputting the location of the wireless charging device by using at least one of an icon scheme, an audio scheme, and a vibration scheme.

14. The method as claimed in claim 13, wherein, when a location notification scheme related to the wireless charging device is set to the icon scheme, the outputting of the estimated location comprises:
outputting an icon including a distance between the portable terminal and the wireless charging device; and
outputting a moving direction from the portable terminal to the wireless charging device.

15. The method as claimed in claim 13, wherein, when a location notification scheme related to the wireless charging device is set to the vibration scheme, the outputting of the estimated location comprises:
determining a strength of vibration in such a manner as to be inversely proportional to a distance between the portable terminal and the wireless charging device; and
outputting the vibration having the determined strength.

16. The method as claimed in claim 13, wherein, when a location notification scheme related to the wireless charging device is set to the audio scheme, the outputting of the estimated location comprises:
determining an interval of audio output in such a manner as to be inversely proportional to a distance between the portable terminal and the wireless charging device; and
outputting audio signals at the determined intervals of the audio output.
